# EUROPEAN PATENT SPECIFICATION

(11) **EP 2 331 643 B1**
(45) Date of publication and mention of the grant of the patent: **05.03.2014**
(21) Application number: 09792220.7
(22) Date of filing: 03.09.2009
(51) Int. Cl.: C09D 133/06, C09D 4/06, C08F 2/00

(54) **AQUEOUS COATING COMPOSITION**
WÄSSRIGE BESCHICHTUNGSZUSAMMENSETZUNG
COMPOSITION AQUEUSE DE REVÊTEMENT

(30) Priority: 04.09.2008 US 190994 P; 04.09.2008 US 191000 P
(43) Date of publication of application: 15.06.2011
(73) Proprietor: Coatings Foreign IP Co. LLC, Wilmington, DE 19801 (US)
(72) Inventor: CARRIERE, Brenda, B-3128 Baal (BE); FLOSBACH, Carmen, 42287 Wuppertal (DE); DREGER, Katharina, 40593 Düsseldorf (DE)
(74) Representative: Maiwald Patentanwalts GmbH
(86) International application number: PCT/US2009/055855
(87) International publication number: WO 2010/028123

(56) References cited:
- EP-A- 0 031 964
- EP-A- 1 008 635
- WO-A-2006/118974

## Description

### FIELD OF THE INVENTION

The present invention refers to an aqueous coating composition comprising aqueous binder latices providing texture effects of the coated surface.

### BACKGROUND OF THE INVENTION

WO 2006/118974 discloses aqueous binder latices which are particularly suitable as binders in water-borne base coats useful in the production of base coat/clear coat two-layer coatings. The aqueous binder latices are produced by multistage emulsion polymerization; olefinically polyunsaturated monomers are copolymerized in all the stages of the emulsion polymerization and olefinically monounsaturated monomers with acid groups are copolymerized in the first stage of the emulsion polymerization. Specific texture effects of the coated surface can not be received with such aqueous binder latices.

It is known that specific texture effects of coatings can be achieved by addition of particles capable of agglomeration to coating compositions. Such particles can be, for example, cellulose fibres, thermally expandable polymers.

EP-A 0452399 discloses the production of aqueous copolymer thickeners for the use in aqueous latex paints to provide structured surfaces. The addition of thickeners can lead to low popping limits, particularly under forced drying conditions. Furthermore, specific required structures of the surfaces can not be obtained by addition of thickeners.

EP 1008635 refers to an aqueous emulsion polymer for the use in coatings, including a first and second polymer. EP 0031964 discloses structured particle latex products*.*

### SUMMARY OF THE INVENTION

The present invention refers to an aqueous coating composition comprising at least one aqueous binder latex, the latex prepared by emulsion polymerisation in the aqueous phase, comprising the steps:
1) preparing an acid functional (meth) acrylic resin from at least two olefinically monounsaturated, polymerizable monomers by polymerization in organic solvent, and neutralizing the acid groups of the formed polymer and inverting into water or by emulsion polymerization and neutralizing the acid groups of the formed polymer, and
2) aqueous emulsion polymerization of at least one olefinically unsaturated, polymerizable monomer, in the presence of the product obtained in process step 1).

The aqueous coating composition of the present invention are based on the aqueous binder latex which is usable as binder providing when combined with hardeners (crosslinking agents) and/or special solvents a number of fine and coarse grain structures of gloss, semi-gloss and/or matt coated surfaces combined with high quantity of the coating properties.

### DETAILED DESCRIPTION

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

By "aqueous binder latices", it is meant water-dispersed emulsion polymers, i.e. water-dispersed polymer particles prepared by emulsion polymerizing free-radically polymerizable olefinically unsaturated monomers, said emulsion polymers being usable as film-forming binders in aqueous coating compositions.

For the aqueous coating composition according to the invention, at least one aqueous binder latex is produced by radical polymerization of olefinically unsaturated monomers of step 1), either in solution or in emulsion, and an emulsion polymerization of olefinically unsaturated monomers of step 2) in the presence of the product obtained in process step 1).

The radical polymerization of the olefinically unsaturated monomers of step 1) can be carried out in solution or in emulsion, both known to those skilled in the art, with the addition of one or more initiators which are thermally dissociable into free radicals, and using one or more emulsifiers in case of emulsion polymerization. The polymerization temperature in the aqueous phase is, for example, 50 to 95°C.

The initiator(s) (free-radical initiators) for step 1) are used in a conventional total quantity of, for example, 0.02 to 6 wt.%, preferably 0.5 to 4 wt.%, relative to the sum of the weights of the monomers of step 1) of the process of the invention, and may be added, for example, contemporaneously to the apportionment of the monomers. The polymerizsation reaction in solution may be initiated with conventional initiators which are thermally dissociable into free radicals. Examples of free-radical initiators are dialkyl peroxides, such as di-tert.-butyl peroxide, dicumyl peroxide; diacyl peroxides, such as, dibenzoyl peroxide, dilauroyl peroxide; hydroperoxides, such as, cumene hydroperoxide, tert.-butyl hydroperoxide; peresters, such as, tert.-butyl perbenzoate, tert.-butyl per-2-ethylhexanoate; peroxy dicarbonates; perketals; ketone peroxides, such as cyclohexane peroxide, methyl isobutyl ketone peroxide and azo compounds, such as, azobisisobutyronitrile; C-C-cleaving initiators, such as, for example, benzopinacole derivatives.

Examples of usable free-radical initiators for emulsion polymerization of step 1) are hydrogen peroxide, peroxodisulfates such as sodium, potassium and ammonium peroxodisulfate, ammonium salts of 4,4'-azobis(4-cyanopentanoic acid), 2,2'-azobis(2-methyl-N-1,1-bis(hydroxymethyl)ethyl)propionamide, 2,2'-azobis(2-methyl-N-2-hydroxyethyl)propionamide as well as conventional redox initiator systems known to the person skilled in the art, such as hydrogen peroxide/ascorbic acid optionally in combination with catalytic metal salts such as iron, copper or chromium salts.

The emulsifier(s) is/are used in a conventional total quantity of, for example, 0.1 to 3 wt.%, relative to the sum of the weights of the monomers of step 1) of the process. Examples are the known cationic, anionic and nonionic emulsifiers usable in the context of emulsion polymerization, such as, for example, cetyltrimethylammonium chloride, benzyldodecyldimethylammonium bromide, sodium dodecyl sulfate, sodium dodecylbenzenesulfonate, polyethylene glycol monolauryl ether.

The emulsion polymerization of step 2) is a free-radical polymerization performed in an aqueous emulsion, i.e. using one or more emulsifiers and with the addition of one or more initiators which are thermally dissociable into free radicals. The polymerization temperature in the aqueous phase is, for example, 50 to 95°C.

The emulsifier(s) is/are used in a conventional total quantity of, for example, 0.1 to 3 wt.%, relative to the sum of the weights of the monomers of step 2) of the process of the invention. Examples are the same as mentioned above for the emulsion polymerization of step 1).

The free-radical initiators for step 2) are used in a conventional total quantity of, for example, 0.02 to 6 wt.%, preferably 0.5 to 4 wt.%, relative to the sum of the weights of the monomers of step 1) and 2) of the process, and may be added, for example, contemporaneously to the apportionment of the monomers. Examples are the same as mentioned above for the emulsion polymerization of step 1).

With regard to polymerization in solution the (meth)acrylic resin of step 1) of the invention are preferably made by first charging a reactor with an organic solvent or a solvent blend and the olefinically monounsaturated, polymerizable monomers. For example, a feed stream comprising a mixture of a quantity of unsaturated monomer and an initiator is charged to the reactor over a period of time. After addition of the feed stream, the reactor contents can be rinsed with additional organic solvent.

Furthermore, it is also possible to use a bulk of polyesters or glycidylester of versatic acid, heating the solvent to reflux temperature and then simultaneously dosing the monomer/initiator mixture over a certain period of time as known by a person skilled in the art.

The polymerisation is carried out, for example, at a temperature between 90°C and 200°C, most preferred between 120°C and 160°C. Suitable organic solvents are water-dilutable or water-mixable organic solvents as known in the art, for example, water-dilutable like monovalent or bivalent alcohols or glycols, for example n-butanol, ethylene glycol, water-dilutable monoethers or esters derived from alcohols, for example methoxypropanol, methoxyproylacetate or water-dilutable glycol ethers like butylglycol. It is also possible to use solvents not dilutable with water and to distill off the solvent from the dispersion.

The acid groups of the resin obtained in process step 1) are neutralized using conventional basic neutralizing agents, such as potassium or sodium hydroxide, ammonia and in particular amines and/or aminoalcohols such as, for example, triethylamine, dimethylisopropylamine, dimethylethanolamine, dimethylisopropanolamine and 2-amino-2-methyl-1-propanol. Dimethylisopropylamine, AMP or ammonia is preferred.

The basic neutralizing agents are added in accordance with a degree of neutralization of, for example, 10 to 120 %, preferably 50 to 100 %. A degree of neutralization of 100 % here corresponds to a stoichiometric neutralization of each acid group in the polymer. The degree of neutralization is selected according to polarity of the resin and/or storage stability as known by person skilled in the art.

With regard to polymerization in emulsion the monomers of step 1) of the process can be added, as is usual in emulsion polymerizations, into an aqueous initial charge, which has generally already been adjusted to the polymerization temperature.

The monomers of step 2) of the process can be added in the same way to start the emulsion polymerization of step 2) as mentioned above for step 1). Process step 2) consequently is started by the beginning of the particular apportionment. The monomers are apportioned one after the other according to successive process steps 1) and 2), wherein apportionment of the momomers of step 2) is begun at the earliest after completion of process step 1), i.e. at the earliest once at least 90 wt.% of the monomers of step 1) have been polymerized to completion, the neutralization and, in case of polymers of step 1 made in solution, the inversion into water, has been performed. Preferably, apportionment of the momomers of step 2) is begun at the earliest after completion of process step 1), that means, 100 wt.% of the monomers of step 1) have been polymerized to completion, the neutralization and, in case of polymerisation in solution, inversion has been performed.

The extent to which the polymerization has been taken to completion may readily be determined by determining the solids content. In general, that means, the monomers of step 1) are initially apportioned in its entirety, after which the neutralizing agent is added once the monomers have been at least 90%, preferably completely, polymerized, the polymer is inverted into water and thereafter, the monomers of step 2) are apportioned.

The ratio by weight of monomers of step 1) to the monomers of step 2) is in the range of 10 : 90 to 90 : 10.

The monomers of step 1) of the process according to the invention comprise at least two olefinically monounsaturated, free-radically polymerizable monomers.

Examples are olefinically monounsaturated, free-radically polymerizable monomers such as (meth)acrylic acid, esters of (meth)acrylic acid, for example, hydroxyalkyl(meth)acrylates like hydroxyethyl(meth)acrylates, polyproplyglycol (meth)acrylates, esters of (metha)crylic acid like (iso)butyl (meth)acrylate, isobornyl(meth)acrylate, ethylhexyl(meth)acrylate, aromatic monomers like styren, in mixture with olefinically monounsaturated, free-radically polymerizable monomers with at least one acid group.

The term "(meth)acrylic" is used in the present description and the claims. This means acrylic and/or methacrylic.

Examples of olefinically monounsaturated, free-radically polymerizable monomers with at least one acid group are such as, for example, (meth)acrylic, itaconic, crotonic, isocrotonic, aconitic, maleic and fumaric acid, semi-esters of maleic and fumaric acid and carboxyalkyl esters of (meth)acrylic acid, for example, beta-carboxyethyl acrylate and adducts of hydroxyalkyl (meth)acrylates with carboxylic anhydrides, such as, for example, phthalic acid mono-2-(meth)acryloyloxyethyl ester.

Preferred are (meth)acrylic acid and/or (meth) acrylic acid esters in mixture with at least one olefinically monounsaturated, free-radically polymerizable monomers with at least one acid group.

The acid value of the acid functional (meth) acrylic resin of step 1) can be in the range of 10 to 150, preferred 50 to 130 mg of KOH/g, based on the non-volatile part.

Additionally, olefinically monounsaturated, free-radically polymerizable monomers with at least one hydroxyl group can also be used in mixture with the above-mentioned monomers for step 1).

Examples of olefinically monounsaturated, free-radically polymerizable monomers with at least one hydroxyl group, such as, allyl alcohol, but in particular hydroxyalkyl (meth)acrylates such as, for example, hydroxyethyl (meth)acrylate, and the hydroxypropyl (meth)acrylates, hydroxybutyl (meth)acrylates isomeric with regard to the position of the hydroxyl group. Further examples are glycerol mono(meth)acrylate, adducts of (meth)acrylic acid onto monoepoxides, such as, for example, versatic acid glycidyl ester and adducts of glycidyl (meth)acrylate onto monocarboxylic acids such as, for example, acetic acid or propionic acid.

The hydroxyl value of the acid functional (meth) acrylic resin of step 1) can be in the range of 5 to 250, preferred 50 to 200 mg of KOH/g, based on the non-volatile part.

Additionally, olefinically polyunsaturated, free-radically polymerizable monomers can also be used in small amounts in mixture with the above-mentioned monomers for step 1).

Examples of olefinically polyunsaturated, free-radically polymerizable monomers are divinylbenzene, hexanediol di(meth)acrylate, ethylene and propylene glycol di(meth)acrylate, 1,3- and 1,4-butanediol di(meth)acrylate, vinyl (meth)acrylate, allyl (meth)acrylate, diallyl phthalate, glycerol tri(meth)acrylate, trimethylolpropane tri(meth)acrylate, pentaerythritol tetra(meth)acrylate, di- and tripropylene glycol di(meth)acrylate, hexamethylene bis(meth)acrylamide. Further examples are compounds which may be produced by a condensation or preferably by an addition reaction of complementary compounds, which in each case, in addition to one or more olefinic double bonds, contain one or more further functional groups per molecule. The further functional groups of the individual complementary compounds comprise pairs of mutually complementary reactive groups, in particular groups which are capable of reacting with one another for the purposes of a possible condensation or addition reaction, as known to those skilled in the art.

It can include olefinic unsaturated monomers that, apart from having at least one olefinic double bond, do not contain any other reactive functional groups. Examples of suitable unsaturated monomers with no other functional groups are esters of unsaturated carboxylic acids with aliphatic monohydric branched or linear as well as cyclic alcohols with 1 to 20 C atoms. Examples of unsaturated carboxylic acids are acrylic acid, methacrylic acid, crotonic.acid and isocrotonic acid. Esters of (meth)acrylic acid are preferred. Examples of (meth)acrylic acid esters with aliphatic alcohols are methylacrylate, ethylacrylate, isopropylacrylate, tert.-butylacrylate, n-butylacrylate, isobutylacrylate, 2-ethylhexylacrylate, laurylacrylate, stearylacrylate and appropriate methylacrylates. Examples of (meth)acrylic acid esters with cyclic alcohols are cyclohexylacrylate, trimethylcyclohexylacrylate, 4-tert. butylcyclohexylacrylate, isobornylacrylate and appropriate methacrylates. Examples of (meth)acrylic acid esters with aromatic alcohols are benzyl(meth)acrylates.

Additionally, olefinically monounsaturated, free-radically polymerizable monomers having at least one aromatic hydrocarbon moiety in the molecule (aromatic monomer) can also be used in mixture with the above-mentioned monomers for step 1).

Examples of such usable aromatic monomers comprise benzyl (meth)acrylate, 2-benzylethyl (meth)acrylate and monovinyl aromatic monomers, such as vinyl toluene, styrene and derivates of styrene like alphamethyl styrene, t-butyl-styrene. Styrene and/or derivates of styrene are preferred.

The monomers of step 2) of the process according to the invention comprise at least one monounsaturated, free-radically polymerizable monomer.

Examples of these monomers are the same as those described in connection with step 1).

In case of the use of one or more aromatic monomer described above the aromatic monomer may constitute 0 to 60 wt.-%, preferred 20 to 40 wt.-%, of the sum of the weights of the monomers of step 1) and step 2) of the process of the invention.

In case of the use of polyunsaturated monomers described above the polyunsaturated monomer may constitute 0 to 3 wt%, preferably 0 to 1 wt-% of the sum of weights of the monomer of step 1) and step 2) of the process of the invention.

Further examples of monomers of step 2) are olefinically monounsaturated, free-radically polymerizable monomers having at least one epoxy-functional group in the molecule. The epoxy-functional monomer may constitute 0 to 5 wt.-% of the sum of the weights of the monomers of step 1) and step 2) of the process. Examples of usable olefinically monounsaturated, free-radically polymerizable monomers with at least one epoxide group comprise glycidyl (meth)acrylate, allyl glycidylether, methallyl glycidylether, 3,4-epoxy-1-vinylcyclohexane, epoxycyclohexyl (meth)acrylate, vinyl glycidylether. Glycidyl (meth)acrylate is preferred.

Preferred examples of the at least one monounsaturated, free-radically polymerizable monomer of step 2) are hydroxyethyl methacrylate, hydroxypropyl methacrylate, isobutyl (meth)acrylate, styrene, ethylhexyl(meth)acrylate isobornylmethacrylate, butylmethacrylate and glycidylmethacrylate.

The monomers of step 1) and step 2) of the process can be selected in such a manner that the calculated glass transition temperature (Tg) of a copolymer composed of a combination of the olefinically monounsaturated monomers of step 1) and step 2) is in the range of 0 to 100°C, preferred 20 to 60°C.

The term "calculated glass transition temperature" refers to the glass transition temperature (Tg) calculated according to the well-known Fox equation (see, for example, T. Brock, M. Groteklaes and P. Mischke, European Coatings Handbook, 2000, Curt R. Vincentz Verlag, Hannover, pages 43-44; Tg values for homopolymers see, for example, Polymer Handbook, 3rd Edition, 1989, J.Wiley & Sons, New York, page VI-209 and the following).

The process permits the production of aqueous binder latices with solids contents of, for example, 30 to 65 wt.%.

Using the aqueous binder latices according to the invention, it is possible to formulate aqueous coating compositions which are distinguished by particular rheological properties, that means, excellent sagging properties, i.e. by a low tendency to sag. Particularly, the aqueous coating compositions provide, when combinded with hardeners (crosslinking agent) and/or special solvents, a number of different texture effects of the coated surface, for example, fine and coarse grain structures of gloss, semi-gloss and/or matt coated surfaces.

For example, water-borne top coats for the production of single-layer coatings and waterborne top coats or clear coats suitable for the production of base coat/clear coat two-layer or multi-layer coatings may be formulated with the aqueous binder latices according to the invention.

The aqueous coating compositions according to the invention, particularly water-borne top coats, can be produced by mixing pigments with the aqueous binder latices according to the invention and, optionally, with further binders differing from the binders introduced by the aqueous binder latex according to the invention, with hardeners (crosslinking agents), fillers (extenders), conventional coating additives and/or organic solvents.

For example, water-borne top coats have solids contents of, for example, 25 to 75 wt.%, preferably of 40 to 65 wt.%. The ratio by weight of pigment content to the resin solids content is, for example, from 0.01:1 to 2:1, relative to the weight of solids. If, in addition to the at least one binder introduced by an aqueous binder latex according to the invention, further binders differing therefrom are also present, the proportion thereof in the binder solids content is, for example, 0 to 80 wt.%.

Examples of further binders differing from the binders introduced by an aqueous binder latex according to the invention are conventional film-forming, water-dilutable binders familiar to the person skilled in the art, such as water-dilutable polyester resins, water-dilutable (meth)acrylic copolymer resins or water-dilutable polyester/(meth)acrylic copolymer hybrids and water-dilutable polyurethane resins or polyurethane/(meth)acrylic copolymer hybrids. These may be reactive or non-functional resins.

The aqueous coating compositions comprising the aqueous binder latices according to the invention may be self drying (physically drying), self crosslinking or externally crosslinking. Accordingly, the aqueous coating compositions may comprise crosslinking agents, such as, for example, free or blocked polyisocyanates or amino resins, for example, melamine resins, preferably free polyisocyanates. Selection of the optionally used crosslinking agents depends on the type of crosslinkable groups in the binders and is familiar to the person skilled in the art. The crosslinking agents may be used individually or in combination. The mixing ratio of crosslinking agent solids to binder solids amounts, for example, to 10:90 to 40:60, preferably 20:80 to 30:70.

Particularly, the binder latices according to the invention show an increase in viscosity combined with a distinctive shear thinning behaviour when they were mixed with organic solvents. Due to this rheology effect, the aqueous coating compositions comprising the aqueous binder latices according to the invention lead to specific texture effects of the coated surface when combined with specific solvents and/or specific hardeners. The texture effects can range from fine grain structures to coarse grain structures, including, for example, scarred, porous, velvety, silky and/or pearl structures, of gloss, semi-gloss or matt coated surfaces. Therefore, the aqueous coating compositions based on the aqueous binder latices according to this invention can be free of thickeners. Thickeners are coating additives known at a person skilled in the art.

Suitable solvents to obtain the specific texture effects are typical solvents used for the formulation of coatings. Preferred solvents are, for example, ethylethoxypropionate, methoxypropylacetate, butylacetate, butylglycolacetate, butyrolactone.

The specific texture effects are achieved by the aqueous coating compositions comprising the aqueous binder latices according to the invention in combination with hardeners (crosslinking agents) and/or special solvents, in general, as mentioned above, and can be ranged in different texture effects creating, for example, by different application methods of the aqueous coating compositions, for example, spraying, nozzeling, and/or by applying to different dry film thicknesses in ranges as mentioned below. The structure can be further modified by the adjustment of the viscosity of the coating composition and the used fillers in the coating composition.

As pigments the conventional coating pigments known at a person skilled in the art can be used, for example, special effect pigments and/or pigments selected from among white, colored and black pigments, using techniques to incorporate the pigments into the aqueous coating compositions as known at a person skilled in the art, for example, in form of an aqueous or non-aqueous paste, in combination with water and/or organic solvents.

Examples of special effect pigments are conventional pigments which impart to a coating a color and/or lightness flop dependent on the angle of observation, such as metal pigments, for example, made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, coated silicon dioxide pigments.

Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments.

The aqueous coating compositions comprising the aqueous binder latices according to the invention may also comprise fillers as known at a person skilled in the art, for example, in proportions of 0 to 30 wt.% relative to the resin solids content. Fillers do not constitute part of the pigment content. Examples are barium sulfate, kaolin, talcum, silicon dioxide, layered silicates.

The aqueous coating compositions may comprise conventional coating additives in conventional quantities, for example, of 0.1 to 5 wt.%, relative to the solids content thereof. Examples are neutralizing agents, antifoaming agents, wetting agents, adhesion promoters, catalysts, levelling agents, anticratering agents, thickeners and light stabilizers.

Preferably, the aqueous coating compositions comprising the aqueous binder latices according to the invention does not comprise thickeners.

The aqueous coating compositions may comprise solvents, for example, in a proportion of preferably less than 20 wt.%, particularly preferably of less than 10 wt.%. The solvents can be the same as mentioned above, or solvents differing from them. The solvents are conventional coating solvents known at a person skilled in the art, which may originate, for example, from the production of the binders or are added separately. Examples of such solvents are mono- or polyhydric alcohols, for example, propanol, butanol, hexanol; glycol ethers or esters, for example, diethylene glycol dialkyl ether, dipropylene glycol dialkyl ether, in each case with C1-6 alkyl, ethoxypropanol, ethylene glycol monobutyl ether; glycols, for example, ethylene glycol, propylene glycol and the oligomers thereof; N-alkylpyrrolidones, such as, for example, N-methylpyrrolidone; ketones such as methyl ethyl ketone, acetone, cyclohexanone and aromatic or aliphatic hydrocarbons.

The aqueous coating compositions may be used as a one-coating system, for example as a single top coat, but also as coating layer in a multi-layer film build, for example, as water-borne top coats for the production of the color- and/or special effect-imparting coating layer within a base coat/clear coat multi-layer coating. The water-borne top coats may be applied by conventional methods as known at a person skilled in the art, for example, by spraying to a dry film thickness of, for example, 10 to 120 µm, preferably 30 to 60 µm, and dried or crosslinked at temperatures of, for example, 20 to 170°C (temperature of the coated substrate).

The drying and crosslinking can be proceed under the use of thermal energy, as known by a person skilled in the art. The coating layers may, for example, be exposed to convective, gas and/or radiant heating, e.g., infra red (IR) and/or near infra red (NIR) irradiation. Drying and crosslinking can also be proceed under ambient temperatures, for example 20 to 25°C (temperature of the coated substrate).

One-coating or multilayer coatings produced in this manner may be applied onto various types of substrate. The substrates are generally all type of substrates, for example, of metal, steel, non-ferrous metal, plastics, wood, paper, glass, ceramics.

The aqueous coating compositions may be applied directly on the substrate surface or on a layer of a primer which can be a liquid or a powder based primer, for example, a conductive primer in case of coating of nonconductive substrates like wood or MDF, or a primer surfacer layer (filler layer).

The present invention is further defined in the following Examples. It should be understood that these Examples are given by way of illustration only.

### EXAMPLES

### Example 1a:

### Preparation of acid functional (Meth) acrylic Resin (Copolymer) of the Invention

In a reactor with a propeller type of stirrer, a thermometer, a condenser and a monomer/initiator feeding system 686 grams of ethoxypropanol (EPR) were loaded and heated up to 144° C. The reactor was closed. A mixture of 203 grams acrylic acid, 876 grams of 2-hydroxyethyl methacrylate (HEMA), 393 grams butyl acrylate, 523,5 grams methyl methacrylate and 60 grams of styrene was added in parallel with a solution of 45 grams of dicumyl peroxide in 81 grams of EPR over 4 hours to the reactor while keeping the temperature at 144° C. After the feed, the lines were rinsed with 133 grams of EPR and the reactor was held 1 hour at 144° C.

### Results:

| | |
|---|---|
| solids content: | 75,1% |
| acid value: | 72,9 mg KOH |

### Example 1b:

### Preparation of a Dispersion

In a reactor with a propeller type of stirrer, a thermometer and a condenser 830 grams of the copolymer resin of Example 1a are heated to 50° C. Then 63 grams of dimethylisopropylamine are added. The polymer blend was diluted with 487 grams of deionized water.

### Results:

| | |
|---|---|
| solids content: | 44,0% |
| acid value: | 73,3 mg KOH/g |
| MEQ amine: | 113 meq/100g |

### Example 1c:

### Preparation of the aqueous Binder Latice of the Invention

In a reactor with a propeller type of stirrer, a thermometer and a condenser 868 grams of the acrylic copolymer resin dispersion of Example 1b and 66 grams of deionized water are heated to 80° C. A stirred monomer emulsion was prepared separately from 70 grams of hydroxypropyl methacrylate (HPMA), 205 grams of styrene, 166 grams of isobutyl methacrylate (IBMA) and 47 grams of butyl acrylate, 16 grams of Disponil FES 32 (anionic surfactant available from Cognis) and 400 grams of deionized water. A solution of 10 grams of ammonium peroxodisulphate in 50 grams of deionized water was added to the reactor content and the monomer emulsion was then slowly added to the reactor content. After all of the monomer emulsion was in, the reactor content was kept for 2 additional hours at 80° C.

### Results:

| | |
|---|---|
| solids content: | 44,5% |
| acid value: | 36,3 mg KOH/g |
| MEQ amine: | 53,5 meq/100g |

### Example 2:

### Preparation of a Binder Latice of Prior Art (Comparative)

In a reactor with a propeller type of stirrer, a thermometer, a condenser and a monomer/initiator feeding system 200 grams of Cardura E10 (Glycidylester of C10 versatic acid available from Hexion) and 90 grams of EPR were loaded and heated to about 150° C. A mixture of 68 grams acrylic acid, 52 grams of HEMA, 160 grams of styrene, 40 grams of Cardura E10, 10 grams of dicumyl peroxide and 40 grams of EPR was added over 2.5 hours to the reactor while keeping the temperature at 150° C. After the feed, the reactor was held 1 hour at 150° C. Then a mixture of 108 grams of HEMA, 30,4 grams of acrylic acid, 142 grams of IBMA, 5 grams of dicumyl peroxide and 45 grams of EPR were added over 2.5 hours at 150°C, followed by a rinsing step for the feed system of 5 grams of EPR. After the rinsing step, the contents of the reactor was kept for 2 hours at 150° C. The reactor content was cooled to 100° C and 100 grams of EPR were distilled off. In a next step 33 grams of dimethylethanolamine were added for a theoretical acid value of 20.5, the amount corrected for the measured acid value.

The polymer blend was diluted with 865 grams of water preheated at about 70° C.

### Results:

| | |
|---|---|
| solids content: | 45.1% |
| acid value: | 33,6 mg KOH/g |
| pH: | 8.2 |

### Example 3:

### Preparation of a Coating Composition based on the aqueous Binder Latice of the Invention, Test Results

Part A: In a water-cooled vessel with stirrer 600.0 grams of the aqueous binder latice of Example 1c and 50.8 grams of Disperbyk®190 (Byk Chemie) are stirred homogeneously. While stirring 125.0 grams of Ti-Pure® R706 (white pigment, DuPont) and 153.2 grams of ASP200 (aluminium silicate hydrated, BASF) are gently added. Stirring is done for 30min at 6000 rpm.

Part B: 42 grams of 1,2 propanedioldiacetate (PGDA) and 58 grams Desmodur®3600 (HDI isocyanate, Bayer) are homogeneously mixed to result in an activator composition.

One part per weight of the activator composition Part B are mixed with 5 parts per weight of Part A and homogenized, whereby adjusting viscosity of the resulted composition with de-ionized water to 3000-3500 mPas using a Brookfield DVII+ / spindle 6 at 100rpm.

### Results:

binder solids content: 30.9 %

### Test results:

Using a SATA RP3000 2.5 nozzle hand application shows
- at 1.0 atmosphere atomisation air a coarse texture at average dft. 67 µm,
- at 3.5 atmosphere atomisation air a fine texture at average dft. 63 µm evaluated after 24hrs airdry.

### Example 4:

### Preparation of a Coating Composition based on Binder Latice of Prior Art,

### Test Results

Part A: In a water-cooled vessel with stirrer 600.0 grams of the acrylic copolymer dispersion of Example 2 and 50.8 grams of Disperbyk®190 (Byk Chemie) are stirred homogeneously. While stirring 125.0 grams of Ti-Pure® R706 (white pigment, DuPont) and 153.2 grams of ASP200 (aluminium silicate hydrated, BASF) are added. Stirring is done for 30min at 6000 rpm.

Part B: 66 grams Desmodur®3600 (HDI isocyanate, Bayer) and 34 grams PGDA (Dow Chemical) are homogeneously mixed to result in an activator composition.

One part per weight of the activator composition Part B are mixed with 3.7 parts per weight of Part A and homogenized, whereby adjusting viscosity of the resulted composition with de-ionized water to 3000-3500 mPas using a Brookfield DVII+ / spindle 6 at 100rpm.

### Results:

binder solids content: 34.4 %

### Test results:

Using a SATA RP3000 2.5 nozzle hand application shows
- at 1.0 atmosphere atomisation air at an average dft. 65 µm an initial medium texture renowing to fine orange peel which is similar to dry application of regular WB topcoats,
- at 3.5 atmosphere atomisation air at average dft. 67 µm an initial medium texture reflowing to fine orange peel which is similar to dry application of regular WB topcoats,
evaluated after 24hrs airdry.

## Claims

1. An aqueous coating composition comprising at least one aqueous binder latex, the latex prepared by emulsion polymerization in the aqueous phase comprising the steps:
1) preparing an acid functional (meth) acrylic resin from at least two olefinically monounsaturated, polymerizable monomers by polymerization in organic solvent, and neutralizing the acid groups of the formed polymer and inverting into water or by emulsion polymerization and neutralizing the acid groups of the formed polymer, and
2) aqueous emulsion polymerization of at least one olefinically unsaturated, polymerizable monomer, in the presence of the product obtained in process step 1),
wherein the monomers of step 1) comprise olefinically monounsaturated, free-radically polymerizable monomer in mixture with olefinically monounsaturated, free-radically polymerizable monomer with at least one acid group, and wherein the ratio by weight of the monomers of step 1) to the monomers of step 2) is in the range of 10 : 90 to 90 : 10.

2. The composition of claim 1, wherein the monomers of step 1) comprise (meth) acrylic acid and/or (meth) acrylic acid esters in mixture with at least one olefinically monounsaturated, free-radically polymerizable monomers with at least one acid group.

3. The composition of claim 1, wherein the monomers of step 2) comprise the same as those of step 1).

4. The composition of claim 1, wherein the acid functional (meth) acrylic resin of step 1) has an acid value in a range of 10 to 150 mg of KOH/g.

5. The composition of claim 1, wherein the monomers of step 1) and 2) are selected that the calculated glass transition temperature (Tg) of a copolymer composed of a combination of the olefinically unsaturated monomers of step 1) and step 2) is in the range of 20 to 60°C.

6. The composition of claim 1, for formulation of water-borne top coat
for the production of single-layer coatings and multi-layer coatings.

7. The composition of claim 6, wherein the solids content of the water-borne top coat is in the range of 25 to 75 wt.%

8. A process for the production of an aqueous binder latex prepared by emulsion polymerization in aqueous phase comprising the steps according to claim 1.

9. An aqueous binder latex produced by the process according to claim 8.

10. A substrate coated with the coating composition of claim 1 and cured.

## Patentansprüche

1. Wässrige Beschichtungszusammensetzung umfassend mindestens einen wässrigen Bindemittellatex, wobei der Latex hergestellt wird durch Emulsionspolymerisation in der wässrigen Phase, umfassend die folgenden Schritte:
1) Herstellen eines säurefunktionalisierten (meth)Acrylharzes aus mindestens zwei olefinisch monoungesättigten, polymerisierbaren Monomeren durch Polymerisation in organischem Lösungsmittel, und Neutralisieren der Säuregruppen des gebildeten Polymers, und Invertieren in Wasser oder durch Emulsionspolymerisation und Neutralisieren der Säuregruppen des gebildeten Polymers, und
2) wässrige Emulsionspolymerisation mindestens eines olefinisch ungesättigten polymerisierbaren Monomers in Gegenwart des in Verfahrensschritt 1) erhaltenen Produktes,
wobei die Monomere aus Schritt 1) olefinisch monoungesättigtes, frei-radikalisch polymerisierbares Monomer in Mischung mit olefinisch monoungesättigtem, frei-radikalisch polymerisierbarem Monomer mit mindestens einer Säuregruppe umfassen, und wobei das Gewichtsverhältnis der Monomere aus Schritt 1) und der Monomere aus Schritt 2) im Bereich von 10:90 bis 90:10 liegt.

2. Zusammensetzung nach Anspruch 1, wobei die Monomere aus Schritt 1) (meth)Acrylsäure und/oder (meth)Acrylsäureester in Mischung mit mindestens einem olefinisch monoungesättigten, frei-radikalisch polymerisierbaren Monomer mit mindestens einer Säuregruppe umfassen.

3. Zusammensetzung nach Anspruch 1, wobei die Monomere des Schrittes 2) dieselben wie diejenigen für Schritt 1) umfassen.

4. Zusammensetzung nach Anspruch 1, wobei das säurefunktionalisierte (meth)Acrylsäureharz von Schritt 1) einen Säurewert im Bereich von 10 bis 150 mg KOH/g aufweist.

5. Zusammensetzung nach Anspruch 1, wobei die Monomere aus Schritt 1) und 2) so ausgewählt sind, dass die berechnete Glasübergangstemperatur (Tg) eines Copolymers, zusammengesetzt aus einer Kombination der olefinisch ungesättigten Monomere von Schritt 1) und Schritt 2), im Bereich von 20 bis 60°C liegt.

6. Zusammensetzung nach Anspruch 1, zur Formulierung einer wassergetragenen Deckbeschichtung für die Herstellung von Einschicht-Beschichtungen und Mehrschicht-Beschichtungen.

7. Zusammensetzung nach Anspruch 6, wobei der Feststoffgehalt der wassergetragenen Deckbeschichtung im Bereich von 25 bis 75 Gew.-% liegt.

8. Verfahren zur Herstellung eines wässrigen Bindemittellatex, hergestellt durch Emulsionspolymerisation in wässriger Phase, umfassend die Schritte gemäß Anspruch 1.

9. Wässriger Bindemittellatex, hergestellt nach dem Verfahren gemäß Anspruch 8.

10. Substrat beschichtet mit der Beschichtungszusammensetzung nach Anspruch 1 und ausgehärtet.

## Revendications

1. Composition de revêtement aqueuse comprenant au moins un latex liant aqueux, le latex ayant été préparé par polymérisation en émulsion en phase aqueuse comprenant les étapes :
1) de préparation d'une résine (méth)acrylique à fonctionnalité acide à partir d'au moins deux monomères polymérisables à monoinsaturation oléfinique par polymérisation dans un solvant organique, et de neutralisation des groupes acide du polymère formé et de réalisation d'une inversion dans l'eau, ou par polymérisation en émulsion et de neutralisation des groupes acide du polymère formé, et
2) de réalisation d'une polymérisation en émulsion aqueuse d'au moins un monomère polymérisable à insaturation oléfinique, en présence du produit obtenu dans l'étape 1),
dans laquelle les monomères de l'étape 1) comprennent un monomère polymérisable par polymérisation radicalaire à monoinsaturation oléfinique en mélange avec un monomère polymérisable par polymérisation radicalaire à monoinsaturation oléfinique comportant au moins un groupe acide, et dans laquelle le rapport en poids des monomères de l'étape 1) sur les monomères de l'étape 2) est situé dans la plage allant de 10/90 à 90/10.

2. Composition selon la revendication 1, dans laquelle les monomères de l'étape 1) comprennent de l'acide (méth)acrylique et/ou des esters d'acide (méth)acrylique en mélange avec au moins un monomère polymérisable par polymérisation radicalaire à monoinsaturation oléfinique comportant au moins un groupe acide.

3. Composition selon la revendication 1, dans laquelle les monomères de l'étape 2) comprennent les mêmes que ceux de l'étape 1).

4. Composition selon la revendication 1, dans laquelle la résine (méth)acrylique à fonctionnalité acide de l'étape 1) présente un indice d'acide situé dans la plage allant de 10 à 150 mg KOH/g.

5. Composition selon la revendication 1, dans laquelle les monomères des étapes 1) et 2) sont choisis de sorte que la température de transition vitreuse (Tg) calculée d'un copolymère composé d'une combinaison des monomères à insaturation oléfinique de l'étape 1) et de l'étape 2) soit située dans la plage allant de 20 à 60°C.

6. Composition selon la revendication 1, pour la formulation d'une couche de finition à base d'eau destinée à la production de revêtements monocouches et de revêtements multicouches.

7. Composition selon la revendication 6, dans laquelle la teneur en extrait sec de la couche de finition à base d'eau est située dans la plage allant de 25 à 75 % en poids.

8. Procédé pour la production d'un latex liant aqueux préparé par polymérisation en émulsion en phase aqueuse, comprenant les étapes selon la revendication 1.

9. Latex liant aqueux produit par le procédé selon la revendication 8.

10. Substrat revêtu de la composition de revêtement selon la revendication 1 et durci.
